# EUROPEAN PATENT SPECIFICATION

(11) **EP 2 161 851 B1**
(45) Date of publication and mention of the grant of the patent: **27.06.2012**
(21) Application number: 08360026.2
(22) Date of filing: 04.09.2008
(51) Int. Cl.: H04W 36/18, H04B 7/06

(54) **Base station coverage optimization using switched multi-element antennas**
Basisstationsdeckungsoptimierung mittels geschalteten Antennen mit mehreren Elementen
Optimisation de la couverture de la station de base à l'aide d'antennes multi-éléments commutées

(43) Date of publication of application: 10.03.2010
(73) Proprietor: Alcatel Lucent, 75007 Paris (FR)
(72) Inventor: Claussen, Holger, Swindon Wiltshire SN5 3NJ (GB); Pivit, Florian, Dublin 5 (IE)
(74) Representative: Sarup, David Alexander

(56) References cited:
- CLAUSSEN H ET AL: "Self-optimization of coverage for femtocell deployments" WIRELESS TELECOMMUNICATIONS SYMPOSIUM, 2008. WTS 2008, IEEE, PISCATAWAY, NJ, USA, 24 April 2008 (2008-04-24), pages 278-285, XP031275017 ISBN: 978-1-4244-1869-5
- CLAUSSEN H ET AL: "An overview of the femtocell concept" BELL LABS TECHNICAL JOURNAL, WILEY, CA, US, vol. 1, no. 13, 21 March 2008 (2008-03-21), pages 221-245, XP001512256 ISSN: 1089-7089
- HUSSO M ET AL: "Adaptive Antennas and Dynamic Spectrum Management for Femtocellular Networks: A Case Study" NEW FRONTIERS IN DYNAMIC SPECTRUM ACCESS NETWORKS, 2008. DYSPAN 2008. 3RD IEEE SYMPOSIUM ON, IEEE, PISCATAWAY, NJ, USA, 14 October 2008 (2008-10-14), pages 1-5, XP031353316 ISBN: 978-1-4244-2016-2
- 3GPP TR25.820: "Technical Specification Group Radio Access Networks; 3G Home NodeB Study Item Technical Report" 3RD GENERATION PARTNERSHIP PROJECT, [Online] vol. v8.1.1, 1 May 2008 (2008-05-01), pages 1-40, XP002518253 Retrieved from the Internet: URL:www.3gpp.org> [retrieved on 2009-03-06]

## Description

### FIELD OF INVENTION

The present invention relates to base station coverage optimization using switched multi-element antennas.

### BACKGROUND OF THE INVENTION

It is known to provide so-called "femto cells" within macro cells of a wireless communication network. Femto cells provide a low power, low cost, user deployed cellular service in residential or enterprise environments, with a typical coverage range of tens of metres. It is known to provide a femto base station which generates a femto cell in its vicinity, with which user equipment may communicate in preference to communicating with a base station of the macro cell.

It is desirable for femto cell base stations to have extensive auto configuration and self-optimisation capability to enable a simple plug-and-play deployment and to integrate into an existing macro cellular network. Femto cell base stations typically use the customer's broadband Internet connection (e.g. DSL, cable etc) as backhaul for communication with a core network. A smaller distance between the femto cell base station and the user equipment compared to the distance between a typical macro cell and the user equipment results in a much lower path loss. Therefore, and due to the additional shielding effects, which reduce interference from external sources, femtocells can provide relatively high indoor data rates.

For a network operator, femto cells are attractive since they are a cost-effective way of significantly increasing data rates of their wireless networks at the customer's premises. They utilise the users existing broadband connector as the backhaul and there are no additional costs for deployment or energy usage since these costs are met by the customer. Femto cells can improve in-building coverage, which is often a difficulty for network operators. In addition, connections using femto cells reduce traffic on the macro cellular network, thereby improving the quality of service provided by the network to the remaining users.

CLAUSSEN H ET AL: "Self-optimization of Coverage for Femtocell Deployments" WIRELESS TELECOMMUNICATIONS SYMPOSIUM 2008, IEEE, PISCATAWAY, NJ, USA, 24 April 2008, pages 278-285 discloses using information on mobility events of passing and indoor users to optimize the femtocell coverage in order to minimise the increase in core network mobility signalling.

Whilst the generation of femto cells enables improved communication between user equipment and the core network to occur, the proliferation of femto cells can cause undesirable consequences.

Accordingly, it is a desire to provide an improved technique for generating a femto cell.

### SUMMARY OF THE INVENTION

According to a first aspect of the present invention there is provided a method of generating a femto cell beam, comprising the steps of: a) providing a switched multiple antenna array comprising a plurality of antennas, one or more antennas from the plurality of antennas being switchable to form one of a plurality of antenna groups, each antenna group providing a corresponding predetermined fixed beam pattern; b) determining a transmission power for each fixed beam pattern which provides less than a predefined maximum occurrence of unwanted user equipment mobility events over a predetermined period of time; c) determining a quality of service provided to registered user equipment for each fixed beam pattern at that transmission power; and d) selecting that antenna group and transmission power which generates a predetermined fixed beam pattern which maximises quality of service to registered user equipment whilst not exceeding the predefined maximum occurrence of unwanted user equipment mobility events.

The first aspect recognises that it is important to optimise the quality of service or coverage provided by the femto cell such that a building is fully covered by the femto cell whilst minimising coverage provided outside the building where other users may be passing. If the femto cell provides coverage in such public spaces, the number of mobility events from unwanted user equipment increases which significantly increases the amount of signalling with the core network and can result in an unacceptably high increase in the call drop probability, as described in L. T. W. Ho, "Effects of user deployed, co-channel femtocells on the call drop probability in a residential scenario," in Proc. IEEE International Symposium on Personal, Indoor, and Mobile Radio Commmunications (PIMRC), 2007*.*

Although coverage adaptation techniques utilising multi-element antennas having adjustable antenna weightings enable a beam to be formed which is adapted to the environment, such an approach requires a feeder network with individual adjustable weightings for each antenna which results in increased costs and complexity. In contrast, however, the first aspect provides a switched multiple antenna array. Such an array does not utilise an adjustable weighting matrix and therefore provides a lower complexity and cost solution where each fixed beam pattern is selected by utilising a simple switch. Accordingly, an antenna group may be formed by selecting one or more antennas from those provided by the multiple antenna array and connecting those antennas together using the switch, thereby providing different fixed beam patterns.

A transmission power for each fixed beam pattern which prevents more than a predefined number of unwanted mobility events occurring over a particular time period is determined for each fixed beam pattern. This optimises the transmission power to help minimise the instances of unwanted mobility events. A quality of service for user equipment registered with the femto cell is determined for each fixed beam pattern at the transmission power which provides for an acceptable number of unwanted mobility events. Using this information it is then possible to select the fixed beam pattern and transmission power which provides the best quality of service to the user equipment registered with the femto cell whilst ensuring that less than the desired number of unwanted mobility events occur. In this way, the fixed beam pattern and transmission power combination is selected which maximises the coverage provided to registered user equipment whilst ensuring that an acceptable level of unwanted mobility events is not exceed. By ensuring that the number of unwanted mobility events remains low, the number of mobility procedures is minimised which minimises the signalling required to the core network and also reduces the risk of call drop from passing user equipment from occurring.

In one embodiment, step b) comprises: determining a transmission power for each fixed beam pattern which minimises occurrences of unwanted user equipment mobility events over the predetermined period of time. Accordingly, the occurrence of unwanted mobility events is measured over a pre-determined period of time and a transmission power which minimises these occurrences is determined for each fixed beam pattern.

In one embodiment, step b) comprises: determining a maximum transmission power for each fixed beam pattern which provides less than a predefined maximum occurrence of unwanted user equipment mobility events over the predetermined period of time. Accordingly, a maximum number of unwanted mobility events is set and the maximum transmission power of each beam pattern which remains less than this predetermined maximum is determined.

In one embodiment, the method comprises the step of: determining whether the selected antenna group and transmission power provide less than the predefined maximum occurrence of unwanted user equipment mobility events over the predetermined period of time and, if so, increasing the transmission power by a first predetermined amount. Accordingly, when it is determined that the number of unwanted mobility events over a period of time is less than an acceptable maximum, the transmission power may therefore be increased by a predetermined amount. It will be appreciated that this helps to maximise the coverage provided by the femto cell beam.

In one embodiment, step c) comprises: estimating a quality of service provided to registered user equipment for each fixed beam pattern at that increased transmission power; and the step d) comprises: selecting that antenna group which generates a predetermined fixed beam pattern which maximises quality of service to registered user equipment at that increased transmission power whilst not exceeding the predefined maximum occurrence of unwanted user equipment mobility events over the predetermined period of time. Accordingly, when it is determined that the transmission power may be increased, the quality of service which may be provided by each fixed beam pattern at the increased transmission power is estimated. The fixed beam pattern which provides the best quality of service at the increased transmission power whilst still achieving less than the maximum number of unwanted mobility event is then selected. It will be appreciated that this re-evaluation of which fixed beam to use helps to ensure that the femto cell beam size and pattern continues to adapt based on the current environment and helps to ensure that after an initial beam pattern selection the beam pattern is continually reselected and resized when more optimal solutions are possible.

In one embodiment, step c) comprises: estimating the quality of service provided to registered user equipment for each fixed beam pattern at that increased transmission power based on previously measured quality of service levels; and the step d) comprises: selecting that antenna group which generates a predetermined fixed beam pattern which maximises a mean of a predetermined number of those worst of estimated quality of service levels whilst not exceeding the predefined maximum occurrence of unwanted user equipment mobility events over the predetermined period of time.

In one embodiment, the method comprises the step of: determining whether, with the selected antenna group and transmission power, occurrences of unwanted user equipment mobility events over a second predetermined period of time exceed the predefined maximum amount and, if so, reducing the transmission power by a second predetermined amount. In the event that the number of unwanted mobility events is greater than that which is acceptable, the transmission power is reduced. It will be appreciated that reducing the transmission power helps to ensure that the instances of unwanted mobility event can also be reduced in order to achieve no more than the acceptable level.

In one embodiment, the second predetermined amount is greater than the predetermined amount and the second predetermined period of time is less than the predetermined period of time. Accordingly, the rate of decrease in transmission power is greater than the rate of increase in transmission power. This helps to ensure that coverage is dominated by the decrease in transmission power caused by unwanted mobility events.

In one embodiment, the method comprises the step of: preventing a reduction in transmission power below a predetermined transmission power level. It will be appreciated that preventing a reduction in these circumstances ensures that transmissions are not disabled completely.

In one embodiment, the predefined maximum occurrence of unwanted user equipment mobility events is zero and the method comprises the step of: upon occurrence of a first unwanted user equipment mobility event, increasing the predetermined period of time for future power increases. It will be appreciated that by having a shorter predetermined period of time prior to the first unwanted mobility event helps to ensure that the selected fixed beam pattern is established as rapidly as possible and any changes thereafter are less prone to fluctuation in order that coverage remains dominated by decreases caused by unwanted mobility events.

In one embodiment, the switched multiple antenna array is provided by a femto base station and the unwanted user equipment mobility events are determined by identifying occurrences of unregistered user equipment attempting at least one of a handover and camping with the femto base station. Accordingly, unwanted mobility events are identified by information collected by the femto base station during attempted handovers and any camping or idle mode events. It will be appreciated that mobility events may be classified as wanted or unwanted, dependent on whether or not the user equipment is registered at the femto cell base station and based on the time the user equipment spends in the femto cell before moving back to the macro cell.

In one embodiment, the step c) comprises: determining the quality of service by at least one of measuring path loss between the switched multiple antenna array and the registered user equipment and receiving path loss information from the registered user equipment. Accordingly, the quality of service may be periodically collected and stored using path loss measurements. These measurements may be performed by the femto cell base station using its own measurement functionality and information on transmit powers and antenna gain, or may be derived from information provided by user equipment using standardised methods, or by a combination of both.

In one embodiment, each of the plurality of antennas have a predetermined fixed gain and are configurable to form the plurality of antenna groups by switching one or more antennas in parallel with a common transceiver. Accordingly, rather than providing a multiple antenna array having a weighting matrix requiring associated separate receive channels, a simple switch array is provided by which a number of antennas are switched together to form different antenna groups providing associated predetermined fixed beam patterns. It will be appreciated that this provides a significantly simplified and lower cost solution.

According to a second aspect of the present invention there is provided, a femto base station comprising: a switched multiple antenna array comprising a plurality of antennas, one or more antennas from the plurality of antennas being switchable to form one of a plurality of antenna groups, each antenna group providing a corresponding predetermined fixed beam pattern; power transmission logic operable to determine for each fixed beam pattern a transmission power which provides less than a predefined maximum occurrence of unwanted user equipment mobility events over a predetermined period of time; quality of service logic operable to determine for each fixed beam pattern a quality of service provided to registered user equipment at that transmission power; and selection logic operable to select that antenna group and transmission power which generates a predetermined fixed beam pattern which maximises quality of service to registered user equipment whilst not exceeding the predefined maximum occurrence of unwanted user equipment mobility events.

In one embodiment, the power transmission logic is operable to determine a transmission power for each fixed beam pattern which minimises occurrences of unwanted user equipment mobility events over the predetermined period of time.

In one embodiment, the power transmission logic is operable to determine a maximum transmission power for each fixed beam pattern which provides less than a predefined maximum occurrence of unwanted user equipment mobility events over the predetermined period of time.

In one embodiment, the power transmission logic is operable to determine whether the selected antenna group and transmission power provide less than the predefined maximum occurrence of unwanted user equipment mobility events over the predetermined period of time and, if so, to increase the transmission power by a first predetermined amount.

In one embodiment, the quality of service logic is operable to estimate a quality of service provided to registered user equipment for each fixed beam pattern at that increased transmission power; and the selection logic is operable to select that antenna group which generates a predetermined fixed beam pattern which maximises quality of service to registered user equipment at that increased transmission power whilst not exceeding the predefined maximum occurrence of unwanted user equipment mobility events over the predetermined period of time.

In one embodiment, the quality of service logic is operable to estimate the quality of service provided to registered user equipment for each fixed beam pattern at that increased transmission power based on previously measured quality of service levels; and the selection logic is operable to select that antenna group which generates a predetermined fixed beam pattern which maximises a mean of a predetermined number of those worst of estimated quality of service levels whilst not exceeding the predefined maximum occurrence of unwanted user equipment mobility events over the predetermined period of time.

In one embodiment, the power transmission logic is operable to determine whether, with the selected antenna group and transmission power, occurrences of unwanted user equipment mobility events over the predetermined period of time exceed the predefined maximum amount and, if so, to reduce the transmission power by a second predetermined amount.

In one embodiment, the second predetermined amount is greater than the first predetermined amount.

In one embodiment, the power transmission logic is operable to prevent a reduction in transmission power below a predetermined transmission power level.

In one embodiment, the predefined maximum occurrence of unwanted user equipment mobility events is zero and the power transmission logic is operable, upon occurrence of a first unwanted user equipment mobility event, to increase the predetermined period of time.

In one embodiment, the switched multiple antenna array is provided by a femto base station and the unwanted user equipment mobility events are determined by identifying occurrences of at least one of unregistered user equipment attempting a handover, camping with the femto base station and time spent by said unregistered user equipment within a femto cell.

In one embodiment, the quality of service logic is operable to determine the quality of service by at least one of measuring path loss between the switched multiple antenna array and the registered user equipment and receiving path loss information from the registered user equipment.

In one embodiment, the each of the plurality of antennas have a predetermined fixed gain and are configurable to form the plurality of antenna groups by switching one or more antennas in parallel with a common transceiver.

According to a third aspect of the present invention there is provided a computer program product operable when executed on a computer to perform the method steps of the first aspect.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings in which:
Figure 1 is a schematic diagram illustrating a wireless communications system incorporating femto cells;
Figure 2 illustrates components of a femto cell base station according to one embodiment;
Figure 3 is a flow chart detailing the main operating steps of the femto cell base station shown in Figure 2;
Figures 4a and 4b show a performance improvement provided by the femto base station of Figure 2; and
Figures 5a and 5b show the relative performance of the femto base station of Figure 2 in a hypothetical optimal arrangement when compared to the implemented operating steps shown in Figure 3.

### DESCRIPTION OF THE EMBODIMENTS

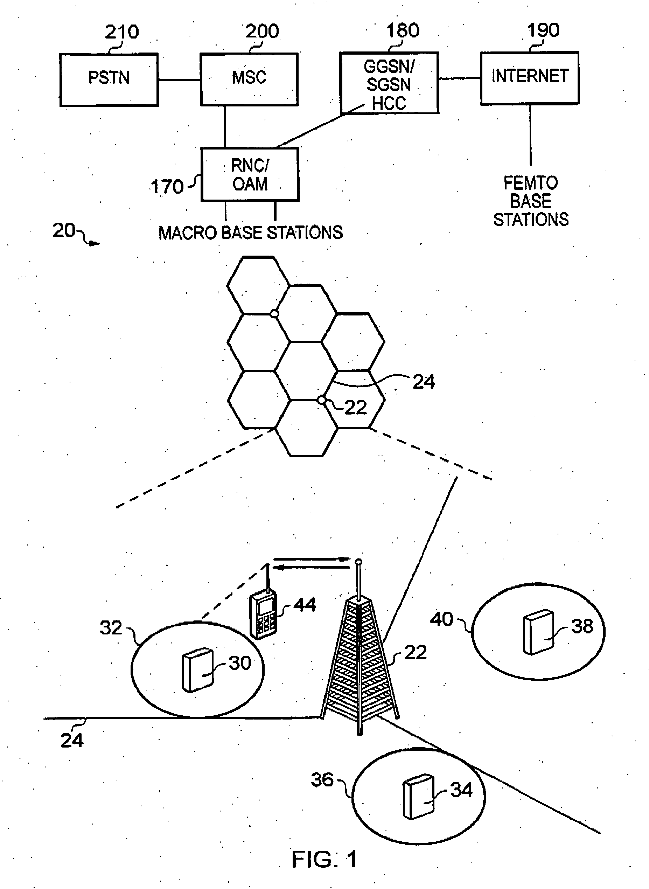

Figure 1 illustrates a wireless communication system, generally 20, according to one embodiment. User equipment 44 roam through the wireless communication system 20. A macro base station 22 is provided which supports macro cells 24. A number of such macro base stations 22 are provided which are distributed geographically in order to provide a wide area of coverage to the user equipment 44. When user equipment 44 is within a macro cell 24 supported by the base station 22 then communications may be established between the user equipment 44 and the base station 22 over an associated radio link. Of course, it will be appreciated that Figure 1 illustrates a small subset of the total number of user equipment and base stations that may be present in a typical communications system.

The wireless communication system 20 is managed by a network controller 170 which includes a radio network controller (RNC) and an operations administration manager (OAM). The network controller 170 controls the operation of the wireless communications system 20 by communicating with the base station 22 over a communications link. The network controller 170 also communicates with the user equipment 44 via their respective radio links in order to efficiently manage the wireless communication system 20.

The network controller 170 maintains a neighbour list which includes information about the geographical relationship between macro cells supported by base stations as well as details of any femto cells within macro cells. In addition, the network controller 170 maintains historic location information which provides information on the previous locations of the user equipment within the wireless communications system 20 to enable future predictions on user equipment location to be made. The network controller 170 is operable to route traffic via circuit-switched and packet-switched networks. Hence, a mobile switching centre 200 is provided with which the radio network controller may communicate. The mobile switching centre 200 then communicates with a circuit-switched network such as a public switched telephone network (PSTN) 210. Likewise, the network controller 170 communicates with service general packet radio service support nodes (SGSN's), a gateway general packet radio support node (GGSN) and a home cell controller or gateway (HCC) 180. The GGSN and HCC then communicate with a packet-switch core 190 such as, for example, the Internet.

There is provided a number of femto cell base stations 30, 34, 38, each of which provides a femto cell 32, 36, 40 in the vicinity of a building within which the associated femto cell base station is installed. The femto cells 32, 36, 40 provide local communications coverage for a user in the vicinity of those buildings. Each femto cell base station 30, 34, 38 communicates with the HCC. A handover occurs between the base station 22 and the femto cell base station 30, 34, 38 when the femto base station 30, 34, 38 detects that user equipment comes within range. Accordingly, it can be seen that the femto cell base stations 30, 34, 38 provide a low-power, low-cost, user-deployed arrangement which provides for local communications with a typical coverage range of tens of metres. The femto cell base stations 30, 34, 38 typically utilise the user's broadband Internet connection as a backhaul.

When activated, it is possible for the femto cell 32, 36, 40 to extend beyond the building housing the femto cell base stations 30, 34, 38. Accordingly, the femto cell 32, 36, 40 may extend in to public spaces which results in a high increase in the number of mobility procedures (such as handovers and idle mode mobility) which significantly increases core network signalling and can also results in an unacceptably high increase in call drop probability.

In order to reduce the instances of such events, the femto base stations 30, 34, 38 seek to minimise the proliferation of the femto cell 32, 36, 40 into any public space outside the building. This is achieved by providing a multiple antenna array within the femto base station 30, 34, 38 which is connected to a transceiver via a parallel switch that allows the selection of one or a combination of multiple antennas for transmission. This enables different fixed transmission beams to be selected at a very low implementation cost. The femto base station 30, 34, 38 then optimises both the fixed beam pattern selection and the transmission power to match the femto cell 32, 36, 40 coverage to the shape of the building. This method utilises information on both mobility event and measurements from the connected user equipment collected over time to estimate coverage. The mobility events are classified into wanted and unwanted events. The method then selects the fixed beam pattern and power combination that maximises the indoor coverage whilst ensuring that an acceptable level of unwanted mobility events is not exceeded, as will be described in more detail below.

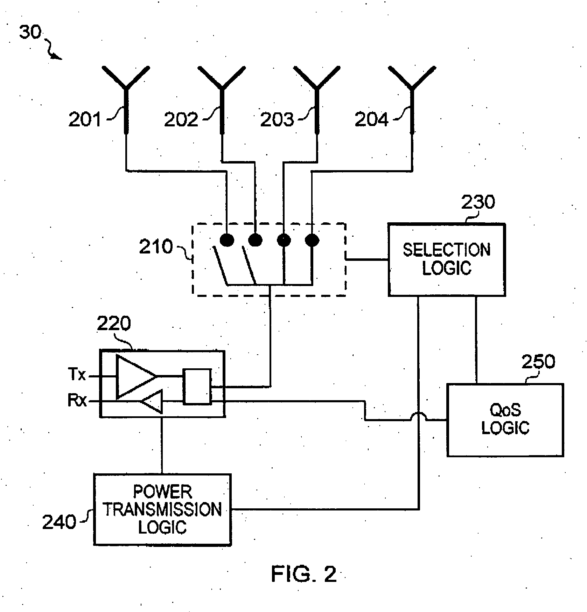

Figure 2 illustrates the femto base station 30 in more detail. It will be appreciated that femto base stations 34, 38 have a similar arrangement. The femto base station 30 comprises a plurality of antennas 201 to 204. The plurality of antennas 201 to 204 are coupled with a parallel switch 210 which enables selection of one or a combination of these antennas 201 to 204 in order to provide different predetermined fixed beam patterns. In this arrangement, four antennas (two patch antennas and two inverted-F antennas) are provided, but other antenna types and numbers may be used. Since the parallel arrangement of the antennas impacts on impedance matching, generally only two antennas may be switched in parallel whilst maintaining reasonable efficiency. Accordingly, for the arrangement in Figure 2, 10 different fixed beam patterns can be selected. The parallel switch 210 is coupled with selection logic 230 which causes the parallel switch 210 to connect one or more antennas 201 to 204 with the transceiver 220 in one of the 10 different groups which provide the 10 different fixed beam patterns.

The selection logic 230 is coupled with power transmission logic 240 which sets the transmission power level for the transceiver 220. The selection logic 230 is also coupled with quality of service logic 250 which provides quality of service information to be utilised by the selection logic 230, as will be described in more detail below.

The femto base station 30 provides auto-configuration and self-optimisation mechanisms. The main objective is to provide coverage optimisation which minimises the total number of mobility events in order to protect the core network from an increase in unnecessary signalling and to prevent an increase in call drop rate as a result of errors during those mobility events. In addition to this, the indoor coverage provided by the femto cell should be maximised.

In an optimal solution, the optimisation process is performed in two steps. In the first step, a transmission power for each fixed beam pattern is determined which minimises the number of mobility events. In the second step, the fixed beam pattern which provides maximum indoor coverage for the selected transmission power is chosen.

In particular, during the first step, the optimum transmission power that on average minimises the total number of mobility events can be found by an exhaustive search of all possible transmission power settings starting with a lowest predetermined value that results in no unwanted mobility events, up to the maximum transmission power value for a predetermined number of mobility events. This search is performed for each beam pattern. Starting from the lowest predetermined value that guarantees some coverage prevents the beam from being disabled completely (which would always results in no mobility events).

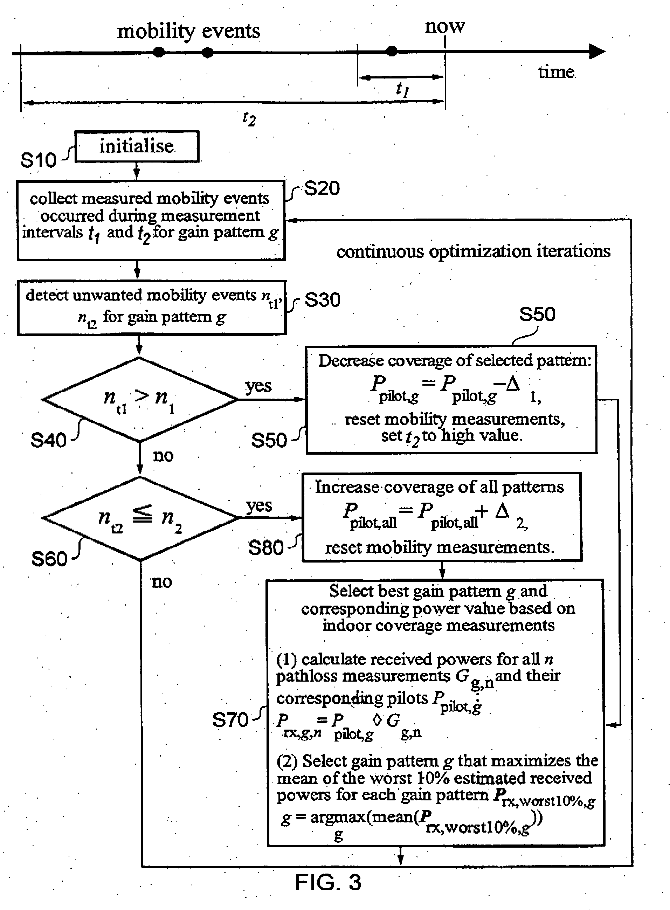

Given that this first step has dealt with minimising the total number of mobility events, attention can now been turned to coverage. The beam pattern is selected to optimise the coverage based on the transmission powers for each beam pattern. This is performed by estimating the coverage for all possible antenna patterns assuming the corresponding transmission power and then selecting the fixed beam pattern that provides the maximum coverage. Although this approach will provide for an optimal solution, the convergence speed of this optimal approach may be slower than desired and sub-optimal configurations may be selected until convergence occurs. Accordingly, an alternative implementation is discussed in more detail below with reference to Figure 3.

Figure 3 is a flow chart illustrating main processing steps of the femto base station 30.

At step S10, the femto cell transmission power is initialised for all fixed beam patterns. An initial fixed beam pattern is selected which provides generally unidirectional coverage. To achieve this, the parallel switch 210 is utilised to connect the two inverted-F antennas. The transmission power for each fixed pattern is stored. Processing then proceeds to step S20.

At step S20, the femto cell base station 30 collects information on mobility events such as handovers and idle mode mobility. The mobility events are measured over two time periods, t₁ and t₂. The time period t₁ is set to be shorter than the time period t₂. The number of mobility events occurring during t₁ is nₜ₁, whilst number of mobility events occurring during t₂ is nₜ₂. In addition, the femto cell base station 30 periodically collects and stores information on the quality of service (or coverage) achieved with the selected fixed beam patterns through path loss measurements. These measurements may be performed by the user equipment 44 using standardised methods, by the femto base station 30 itself using its own measurement functionality, and information on transmission powers and antenna gain or by a combination of both. Processing then proceeds to step S30.

At step S30, mobility events are then classified as wanted or unwanted event over time, dependent upon whether the user equipment is registered at the femto cell base station 30 and on the time user equipment spends in the femto cell 32 before moving back to the macro cell 24. In this example implementation it is desired to prevent all unwanted mobility events from occurring and therefore n₁ and n₂ are set to zero. Processing then proceeds to step S40.

At step S40, processing begins which seeks to minimise unwanted mobility events from transient users which briefly handover to the femto cell base station 30 and then immediately hand back to the macro base station 22 after passing through the femto cell 32. This processing has the objective of maximising the quality of service or coverage provided by the femto cell base station 30 whilst limiting the unwanted mobility event from such passing user equipment. Accordingly, it is determined whether the number of unwanted mobility events of passing users nₜ₁ over time period t₁ exceeds a predetermined value n₁. If the number of unwanted mobility events nₜ₁ exceeds the predefined value n₁ over the period of time t₁, then processing proceeds to step S50 where the transmission power is reduced in order to reduce the likelihood of such unwanted mobility events occurring in the future. If the number of unwanted mobility events nₜ₁ is not greater than the predefined value n₁, then processing proceeds to step S60 where it is determined if it is possible to increase the quality of service or coverage provided by the femto cell base station 30. In this example, in order to speed up the initial increase in quality of service and coverage, t₂ is initially set to a low value of around 120 seconds until a first unwanted mobility event is detected. Then, at step S40, t₂ is increased significantly to around six hours in order to help prevent further undesirable increases in quality of service and coverage, and to ensure that coverage is dominated by the decreases caused by unwanted mobility events.

At step S50, the transmission power for the currently selected fixed beam pattern is reduced by a value Δ₁, the femto base station 33 then sets the time period t₂ to a high value which decreases the probability of increases in coverage occurring in the future. In this example, for an unwanted mobility event occurring in the femto cell, the transmission power reduction Δ₁ has a value of 3DB. The information stored on mobility events is then reset. Only the currently selected fixed beam pattern has its power reduced by the value Δ₁. Processing then proceeds to step S70 where it is determined whether the currently selected fixed beam pattern with its reduced transmission power still remains the best selection to provide a good quality of service, as will be described in more detail below.

At step S60, it is determined whether it is possible to increase the transmission power by establishing if the number of unwanted mobility events nₜ₂ is less than or equal to a predefined acceptable number of events n₂ over a time period t₂. If the number of unwanted events nₜ₂ is less than or equal to n₂ then processing proceeds to step S80 since the transmission power may be increased. If the number of unwanted events is larger than n₂, then it is not appropriate to increase the coverage and processing returns back to S20 where mobility events and path loss measurements continue to be performed.

At step S80. the transmission power for each fixed beam pattern is increased by a step Δ₂ to provide improved quality of service and coverage. In this example, the step Δ₂ for transmission power increase is selected to be 0.3 DB in order that the coverage is incremented in small steps. The mobility event measurements are then reset and processing then proceeds to step S70 to determine whether the currently selected fixed beam pattern is still the best selection to provide a good quality of service.

At step S70. whenever the transmission power is changed, the pattern selection is reevaluated and the best fixed beam pattern and transmission power combination is selected. Accordingly, the estimated receive powers at the measured points for the current transmission values for each fixed beam pattern are calculated. Then, the fixed beam pattern and transmission power combination that maximises the mean of the worst 10% of the estimated received powers is selected as the best new fixed beam pattern and transmission power. Thereafter, processing returns to step S20 where mobility events and path loss measurements continue to be performed.

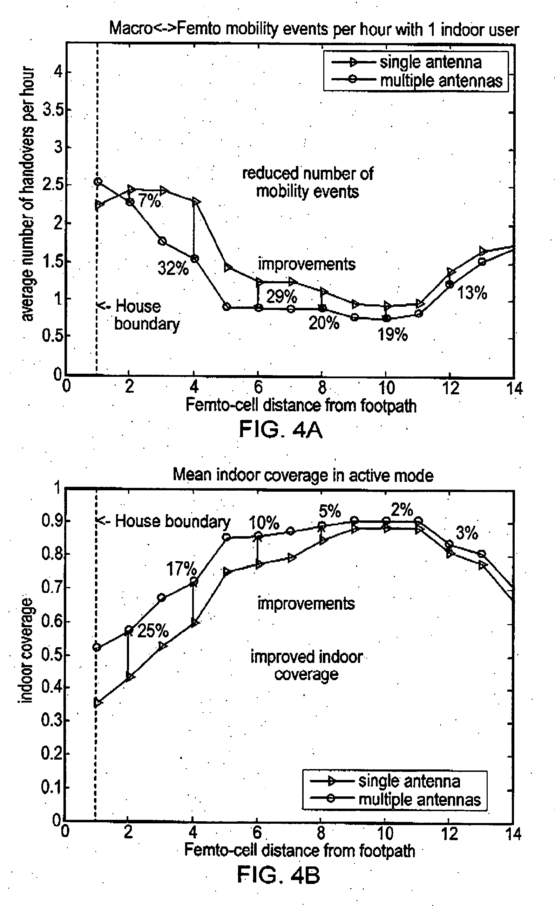

Figure 4a shows that the multiple antenna arrangement of the femto base station 30 significantly reduces the number of unwanted mobility events when compared to a single element antenna solution, even when utilising a sophisticated coverage self-optimisation technique.

Figure 4b shows that in addition to the reduced number of unwanted mobility events, the indoor coverage or quality of service is also improved when compared to a single element antenna solution utilising, even when utilising a sophisticated coverage self-optimisation technique. As can be seen, the most significant improvement in coverage occurs when the femto cell base station is deployed in unsuitable locations close to a footpath having passing user equipment. Accordingly, it can be seen that improved quality of service or coverage is achieved within the house without increasing the number of unwanted mobility events and the associated core network signalling.

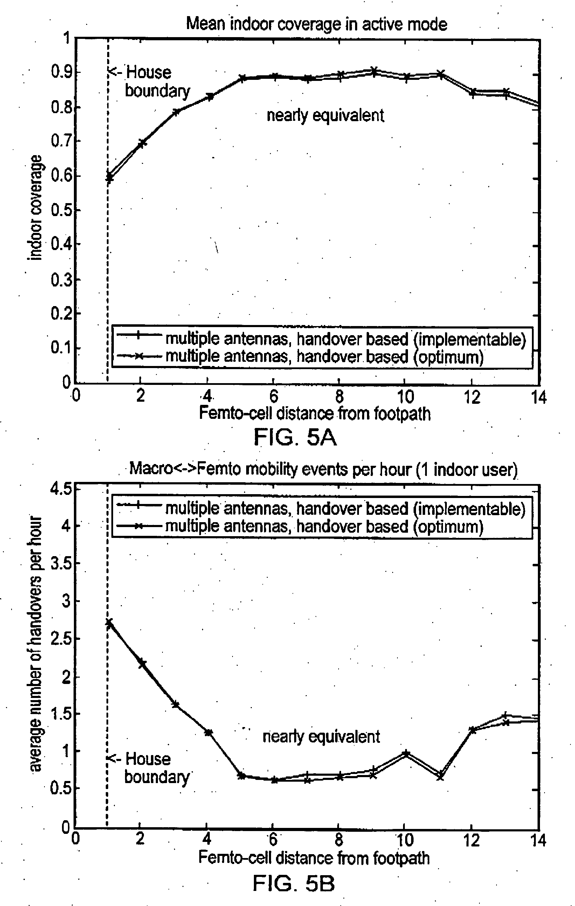

Figures 5a and 5b show the relative performance of the femto cell base station when operating using the exhaustive procedures of the optimal solution described above when compared to the example implementation shown in Figure 3. As can be seen, the performance achieved is very similar, even when utilising the simpler and lower complexity solution.

Accordingly, it can be seen that there is provided a cost effective method for optimising the coverage of femto cells by using switched multi-element antennas and a self-optimisation method that jointly optimises both transmission power and antenna pattern. As a result, the number of unwanted mobility events that would result in additional loads to the core network can be reduced significantly. In addition, the quality of service or coverage is improved, which gives the user more flexibility over where the femto cell can be deployed.

Although illustrative embodiments of the invention have been disclosed in detail herein, with reference to the accompanying drawings, it is understood that the invention is not limited to the precise embodiment shown and that various changes and modifications can be effected therein by one skilled in the art without departing from the scope of the invention as defined by the appended claims.

## Claims

1. A method of generating a femto cell beam, comprising the steps of:
a) providing a switched multiple antenna array comprising a plurality of antennas (201 - 204), one or more antennas from said plurality of antennas being switchable to form one of a plurality of antenna groups, each antenna group providing a corresponding predetermined fixed beam pattern;
b) determining a transmission power for each fixed beam pattern which provides less than a predefined maximum occurrence of unwanted user equipment mobility events over a predetermined period of time;
c) determining a quality of service provided to registered user equipment for each fixed beam pattern at that transmission power; and
d) selecting (S70) that antenna group and transmission power which generates a predetermined fixed beam pattern which maximises quality of service to registered user equipment whilst not exceeding said predefined maximum occurrence of unwanted user equipment mobility events.

2. The method of claim 1, wherein said step b) comprises:
determining a transmission power for each fixed beam pattern which minimises occurrences of unwanted user equipment mobility events over said predetermined period of time.

3. The method of claim 2, wherein said step b) comprises:
determining a maximum transmission power for each fixed beam pattern which provides less than a predefined maximum occurrence of unwanted user equipment mobility events over said predetermined period of time.

4. The method of claim 3, comprising the step of:
determining (S60) whether said selected antenna group and transmission power provide less than said predefined maximum occurrence of unwanted user equipment mobility events over said predetermined period of time and, if so, increasing (S80) said transmission power by a first predetermined amount.

5. The method of claim 4, wherein said step c) comprises:
estimating a quality of service provided to registered user equipment for each fixed beam pattern at that increased transmission power; and said step d) comprises:
selecting that antenna group which generates a predetermined fixed beam pattern which maximises quality of service to registered user equipment at that increased transmission power whilst not exceeding said predefined maximum occurrence of unwanted user equipment mobility events over said predetermined period of time.

6. The method of claim 5, wherein said step c) comprises:
estimating said quality of service provided to registered user equipment for each fixed beam pattern at that increased transmission power based on previously measured quality of service levels; and said step d) comprises:
selecting that antenna group which generates a predetermined fixed beam pattern which maximises a mean of a predetermined number of those worst of estimated quality of service levels whilst not exceeding said predefined maximum occurrence of unwanted user equipment mobility events over said predetermined period of time.

7. The method of claim 4, comprising the step of:
determining (S40) whether, with said selected antenna group and transmission power, occurrences of unwanted user equipment mobility events over a second predetermined period of time exceed said predefined maximum amount and, if so, reducing (S50) said transmission power by a second predetermined amount.

8. The method of claim 7, wherein said second predetermined amount is greater than said predetermined amount and said second predetermined period of time is less than said predetermined period of time.

9. The method of claim 7, comprising the step of:
preventing a reduction in transmission power below a predetermined transmission power level.

10. The method of claim 1, wherein said predefined maximum occurrence of unwanted user equipment mobility events is zero, said method comprising the step of:
upon occurrence of a first unwanted user equipment mobility event, increasing said predetermined period of time.

11. The method of claim 1, wherein said switched multiple antenna array is provided by a femto base station (30) and said unwanted user equipment mobility events are determined by identifying occurrences of at least one of unregistered user equipment attempting a handover, camping with said femto base station and time spent by said unregistered user equipment within a femto cell (32).

12. The method of claim 1, wherein said step c) comprises:
determining said quality of service by at least one of measuring path loss between said switched multiple antenna array and said registered user equipment and receiving path loss information from said registered user equipment.

13. The method of claim 1, wherein said each of said plurality of antennas have a predetermined fixed gain and are configurable to form said plurality of antenna groups by switching one or more antennas in parallel with a common transceiver (220).

14. A femto base station (30) comprising:
a switched multiple antenna array comprising a plurality of antennas (201 - 204), one or more antennas from said plurality of antennas being switchable to form one of a plurality of antenna groups, each antenna group providing a corresponding predetermined fixed beam pattern;
power transmission logic (240) operable to determine for each fixed beam pattern a transmission power which provides less than a predefined maximum occurrence of unwanted user equipment mobility events over a predetermined period of time;
quality of service logic (250) operable to determine for each fixed beam pattern a quality of service provided to registered user equipment at that transmission ' power; and
selection logic (230) operable to select that antenna group and transmission power which generates a predetermined fixed beam pattern which maximises quality of service to registered user equipment whilst not exceeding said predefined maximum occurrence of unwanted user equipment mobility events.

15. A computer program product comprising a computer-readable medium storing instructions that when executed on a computer perform the method steps of claim 1.

## Patentansprüche

1. Verfahren zum Erzeugen eines Femtozellen-Strahls, die folgenden Schritte umfassend:
a) Bereitstellen einer geschalteten Multiantennenanordnung mit einer Mehrzahl von Antennen (201 - 204), wobei eine oder mehrere Antennen der besagten Mehrzahl von Antennen schaltbar sind, um eine der Mehrzahl von Antennengruppen zu bilden, wobei jede Antennengruppe ein entsprechendes vorgegebenes festes Strahlmuster bereitstellt;
b) Ermitteln einer Sendeleistung für jedes festes Strahlmuster, welche weniger als eine vordefinierte maximale Anzahl des Auftretens von unerwünschten Benutzerendgerät-Mobilitätsereignissen über eine vorbestimmte Zeitspanne gewährleistet;
c) Ermitteln einer an das registrierte Benutzerendgerät für jedes feste Strahlmuster bei der besagten Sendeleistung bereitgestellten Dienstgüte; und
d) Auswählen (S70) derjenigen Antennengruppe und derjenigen Sendeleistung, die ein vorgegebenes festes Strahlmuster erzeugen, welche die Dienstgüte für das registrierte Benutzerendgerät maximiert, ohne die besagte vordefinierte maximale Anzahl des Auftretens von unerwünschten Benutzerendgerät-Mobilitätsereignissen zu überschreiten.

2. Verfahren nach Anspruch 1, wobei der besagte Schritt b) umfasst:
Ermitteln einer Sendeleistung für jedes feste Strahlmuster, welche die Auftritte von unerwünschten Benutzerendgerät-Mobilitätsereignissen über die besagte vorbestimmte Zeitspanne minimiert.

3. Verfahren nach Anspruch 2, wobei der besagte Schritt b) umfasst:
Ermitteln einer maximalen Sendeleistung für jedes feste Strahlmuster, welche weniger als eine vordefinierte maximale Anzahl des Auftretens von unerwünschten Benutzerendgerät-Mobilitätsereignissen über die besagte vorbestimmte Zeitspanne gewährleistet.

4. Verfahren nach Anspruch 3, den folgenden Schritt umfassend:
Ermitteln (S60), ob die besagte ausgewählte Antennengruppe und die besagte ausgewählte Sendeleistung weniger als die besagte vordefinierte maximale Anzahl des Auftretens von unerwünschten Benutzerendgerät-Mobilitätsereignissen über die besagte vorbestimmte Zeitspanne gewährleistet, und, wenn dies der Fall ist, Erhöhen (580) der besagten Sendeleistung um einen ersten vorgegebenen Wert.

5. Verfahren nach Anspruch 4, wobei der besagte Schritt c) umfasst:
Schätzen einer an das registrierte Benutzerendgerät für jedes feste Strahlmuster bei der besagten erhöhten Sendeleistung bereitgestellten Dienstgüte; und wobei der besagte Schritt d) umfasst:
Auswählen derjenigen Antennengruppe, die ein vorgegebenes festes Strahlmuster erzeugt, welches die Dienstgüte für das registrierte Benutzerendgerät bei der besagten erhöhten Sendeleistung maximiert, ohne die besagte vordefinierte maximale Anzahl des Auftretens von unerwünschten Benutzerendgerät-Mobilitätsereignissen über die besagte vorbestimmte Zeitspanne zu überschreiten.

6. Verfahren nach Anspruch 5, wobei der besagte Schritt c) umfasst:
Schätzen der besagten an das registrierte Benutzerendgerät für jedes feste Strahlmuster bei der besagten erhöhten Sendeleistung bereitgestellten Dienstgüte auf der Basis der vorher gemessenen Dienstgütepegel; und wobei der besagte Schritt d) umfasst:
Auswählen derjenigen Antennengruppe, die ein vorgegebenes festes Strahlmuster erzeugt, welches einen Mittelwert einer vorgegebenen Anzahl der schlechtesten der geschätzten Dienstgütepegel maximiert, ohne die besagte vordefinierte maximale Anzahl des Auftretens von unerwünschten Benutzerendgerät-Mobilitätsereignissen über die besagte vorbestimmte Zeitspanne zu überschreiten.

7. Verfahren nach Anspruch 4, den folgenden Schritt umfassend:
Ermitteln (S40), ob, mit der besagten ausgewählten Antennengruppen und der besagten ausgewählten Sendeleistung, Auftritte von unerwünschten Benutzerendgerät-Mobilitätsereignissen über eine zweite vorgegebene Zeitspanne die besagte vordefinierte maximale Anzahl überschreiten, und, wenn dies der Fall ist, Reduzieren (550) der besagten Sendeleistung um einen zweiten vorgegebenen Wert.

8. Verfahren nach Anspruch 7, wobei der besagte zweite vorgegebene Wert größer als der besagte vorgegebene Wert ist, und die besagte zweite vorgegebene Zeitspanne kürzer als die besagte vorgegebene Zeitspanne ist.

9. Verfahren nach Anspruch 7, den folgenden Schritt umfassend:
Verhindern einer Reduzierung der Sendeleistung unter einem vorgegebenen Sendeleistungspegel.

10. Verfahren nach Anspruch 1, wobei die besagte vordefinierte maximale Anzahl des Auftretens von unerwünschten Benutzerendgerät-Mobilitätsereignissen Null ist, wobei das besagte Verfahren den folgenden Schritt umfasst:
Bei Auftreten eines ersten unerwünschten Benutzerendgerät-Mobilitätsereignisses, Erhöhen der besagten vorgegebenen Zeitspanne.

11. Verfahren nach Anspruch 1, wobei die besagte geschaltete Multiantennenanordnung von einer Femtobasisstation (30) bereitgestellt wird und die besagten unerwünschten Benutzerendgerät-Mobilitätsereignisse ermittelt werden, indem die Auftritte mindestens entweder des Versuchens eines Handovers durch ein nicht registriertes Benutzerendgerät, des Verbindens mit der besagten Femtobasisstation oder der von dem besagten nicht registrierten Benutzerendgerät innerhalb einer Femtozelle (32) identifiziert werden.

12. Verfahren nach Anspruch 1, wobei der besagte Schritt c) umfasst:
Ermitteln der besagten Dienstgüte durch mindestens entweder das Messen des Pfadverlustes zwischen der besagten geschalteten Multiantennenanordnung und dem besagten registrierten Benutzerendgerät oder das Empfangen von Pfadverlustinformationen von dem besagten registrierten Benutzerendgerät.

13. Verfahren nach Anspruch 1, wobei jede besagte der besagten Mehrzahl von Antennen eine vorgegebene feste Verstärkung aufweist und konfigurierbar ist, um die besagte Mehrzahl von Antennengruppen zu bilden, indem eine oder mehrere Antennen parallel mit einem gemeinsamen Transceiver (220) geschaltet werden.

14. Femtobasisstation (30), umfassend:
Eine geschaltete Multiantennenanordnung mit einer Mehrzahl von Antennen (201 - 204), wobei eine oder mehrere Antennen der besagten Mehrzahl von Antennen schaltbar sind, um eine der Mehrzahl von Antennengruppen zu bilden, wobei jede Antennengruppe ein entsprechendes vorgegebenes festes Strahlmuster bereitstellt;
Leistungsübertragungslogik (240), dazu ausgelegt, für jedes feste Strahlmuster eine Sendeleistung zu ermitteln, welche weniger als eine vordefinierte maximale Anzahl des Auftretens von unerwünschten Benutzerendgerät-Mobilitatsereignissen über eine vorgegebene Zeitspanne gewährleistet;
Dienstgütelogik (250), dazu ausgelegt, für jedes feste Strahlmuster eine für das registrierte Benutzerendgerät bei der besagten Sendeleistung bereitgestellte Dienstgüte zu ermitteln; und
Auswahllogik (230), dazu ausgelegt, diejenige Antennengruppe und diejenige Sendeleistung auszuwählen, die ein vorgegebenes festes Strahlmuster erzeugen, welches die Dienstgüte für das registrierte Benutzerendgerät maximiert, ohne die besagte vordefinierte maximale Anzahl des Auftretens von unerwünschten Benutzerendgerät-Mobilitätsereignissen zu überschreiten.

15. Computerprogramm-Produkt, umfassend eine computerlesbares Medium, auf welchem Befehle gespeichert sind, die bei der Ausführung auf einem Computer die Verfahrensschritte gemäß Anspruch 1 durchführen.

## Revendications

1. Procédé de génération d'un faisceau de femtocellule, comprenant les étapes suivantes :
a) fournir un réseau d'antennes multiples commutées comprenant une pluralité d'antennes (201 à 204), une ou plusieurs antennes parmi ladite pluralité d'antennes pouvant être commutées pour former un groupe d'antennes parmi une pluralité de groupes d'antennes, chaque groupe d'antennes fournissant une configuration de faisceaux fixe prédéterminée correspondante ;
b) déterminer une puissance de transmission pour chaque configuration de faisceaux fixe qui fournit moins d'une occurrence maximum prédéfinie d'événements de mobilité d'équipement utilisateur non désirés durant une période prédéterminée ;
c) déterminer une qualité de service fournie à l'équipement d'utilisateur enregistré pour chaque configuration de faisceaux fixe à cette puissance de transmission ; et
d) sélectionner (S70) ce groupe d'antennes et la puissance de transmission qui génère une configuration de faisceaux fixe prédéterminée qui maximise la qualité de service de l'équipement d'utilisateur enregistré sans dépasser ladite occurrence maximum prédéfinie d'événements de mobilité d'équipement utilisateur non désirés.

2. Procédé selon la revendication 1, dans lequel l'étape b) comprend l'étape suivante :
déterminer une puissance de transmission pour chaque configuration de faisceaux fixe qui réduit au minimum les occurrences d'évènements de mobilité d'équipement utilisateur non désirés durant ladite période prédéterminée.

3. Procédé selon la revendication 2, dans lequel l'étape b) comprend l'étape suivante :
déterminer une puissance de transmission maximum pour chaque configuration de faisceaux fixe qui fournit moins d'une occurrence maximum prédéfinie d'événements de mobilité d'équipement utilisateur non désirés durant ladite période prédéterminée.

4. Procédé selon la revendication 3, comprenant l'étape suivante :
déterminer (S60) si ledit groupe d'antennes sélectionné et la puissance de transmission fournissent moins que ladite occurrence maximum prédéfinie d'évènements de mobilité d'équipement utilisateur non désirés durant ladite période prédéterminée et, si tel est le cas, augmenter (S80) ladite puissance de transmission selon une première valeur prédéterminée.

5. Procédé selon la revendication 4, dans lequel ladite étape c) comprend l'étape suivante :
estimer une qualité de service fournie à l'équipement d'utilisateur enregistré pour chaque configuration de faisceaux fixe à cette puissance de transmission accrue ; et ladite étape d) comprend l'étape suivante :
sélectionner ce groupe d'antennes qui génère une configuration de faisceaux fixe prédéterminée qui maximise la qualité de service de l'équipement d'utilisateur enregistré à cette puissance de transmission accrue sans dépasser ladite occurrence maximum prédéfinie d'événements de mobilité d'équipement utilisateur non désirés durant ladite période prédéterminée.

6. Procédé selon la revendication 5, dans lequel ladite étape c) comprend l'étape suivante :
estimer ladite qualité de service fournie à l'équipement d'utilisateur enregistré pour chaque configuration de faisceaux fixe à cette puissance de transmission accrue sur la base de niveaux de qualité de service précédemment mesurés ; et ladite étape d) comprend l'étape suivante :
sélectionner ce groupe d'antennes qui génère une configuration de faisceaux fixe prédéterminée qui maximise une moyenne d'un nombre prédéterminé des plus faibles niveaux de qualité de service estimés sans dépasser ladite occurrence maximum prédéfinie d'événements de mobilité d'équipement utilisateur non désirés durant ladite période prédéterminée.

7. Procédé selon la revendication 4, comprenant les étapes suivantes:
déterminer (S40) si, avec ledit groupe d'antennes sélectionné et la puissance de transmission, des occurrences d'événements de mobilité d'équipement utilisateur non désirés durant une deuxième période prédéterminée dépassent ladite valeur maximum prédéfinie et, si tel est le cas, réduire (S50) ladite puissance de transmission selon une deuxième valeur prédéterminée.

8. Procédé selon la revendication 7, dans lequel ladite deuxième valeur prédéterminée est supérieure à ladite valeur prédéterminée et ladite deuxième période prédéterminée est inférieure à ladite période prédéterminée.

9. Procédé selon la revendication 7, comprenant l'étape suivante :
empêcher une réduction de la puissance de transmission en-dessous d'un niveau de puissance de transmission prédéterminé.

10. Procédé selon la revendication 1, dans lequel ladite occurrence maximum prédéfinie d'événements de mobilité d'équipement utilisateur non désirés est nulle, ledit procédé comprenant l'étape suivante :
lors de l'occurrence d'un premier événement de mobilité d'équipement utilisateur non désiré, augmenter ladite période prédéterminée.

11. Procédé selon la revendication 1, dans lequel ledit réseau d'antennes multiples commutées est fourni par une station de base femto (30) et lesdits événements de mobilité d'équipement utilisateur non désirés sont déterminés en identifiant des occurrences d'au moins un équipement d'utilisateur non enregistré tentant un transfert, se positionnant avec ladite station de base femto et le temps utilisé par ledit équipement d'utilisateur non enregistré dans une femtocellule (32).

12. Procédé selon la revendication 1, dans lequel ladite étape c) comprend l'étape suivante :
déterminer ladite qualité de service en mesurant l'affaiblissement de trajet entre ledit réseau d'antennes multiples commutées et ledit équipement d'utilisateur enregistré et/ou en recevant des informations sur l'affaiblissement de trajet provenant dudit équipement d'utilisateur enregistré.

13. Procédé selon la revendication 1, dans lequel chaque antenne parmi ladite pluralité d'antennes présente un gain fixe prédéterminé et peut être configurée pour former ladite pluralité de groupes d'antennes en commutant une ou plusieurs antennes en parallèle avec un émetteur/récepteur commun (220).

14. Station de base femto (30) comprenant :
un réseau d'antennes multiples commutées comprenant une pluralité d'antennes (201 - 204), une ou plusieurs antennes parmi ladite pluralité d'antennes pouvant être commutées pour former un groupe d'antennes parmi une pluralité de groupes d'antennes, chaque groupe d'antennes fournissant une configuration de faisceaux fixe prédéterminée correspondante ;
une logique de transmission de puissance (240) permettant de déterminer pour chaque configuration de faisceaux fixe une puissance de transmission qui fournit moins d'une occurrence maximum prédéfinie d'événements de mobilité d'équipement utilisateur non désirés durant une période prédéterminée :
une logique de qualité de service (250) permettant de déterminer pour chaque configuration de faisceaux fixe une qualité de service fournie à l'équipement d'utilisateur enregistré à cette puissance de transmission ; et
une logique de sélection (230) permettant de sélectionner ce groupe d'antennes et la puissance de transmission qui génère une configuration de faisceaux fixe prédéterminée qui maximise la qualité de service de l'équipement d'utilisateur enregistré sans dépasser ladite occurrence maximum prédéfinie d'événements de mobilité d'équipement utilisateur non désirés.

15. Produit de programme informatique comprenant un support lisible par ordinateur stockant des instructions qui, lorsqu'elles sont exécutées sur un ordinateur, réalisent les étapes de procédé conformément à la revendication 1.
